**Europäisches Patentamt**

**European Patent Office**

**Office européen des brevets**

(19)

(11) Veröffentlichungsnummer: **0 010 575**
**A1**

# EUROPÄISCHE PATENTANMELDUNG

(12)

(21) Anmeldenummer: **79102738.6**

(22) Anmeldetag: **31.07.79**

(51) Int. Cl.³: **G 01 M 3/28**

(30) Priorität: **02.08.78 AT 5588/78**

(43) Veröffentlichungstag der Anmeldung: **14.05.80**
**Patentblatt 80/10**

(84) Benannte Vertragsstaaten: **CH DE FR IT NL SE**

(71) Anmelder: **Stadt Wien, Neues Rathaus, A-1141 Wien (AT)**

(72) Erfinder: **Zöhrer, Willibald, Elisabethstrasse 13, A-2340 Mödling (AT)**

(74) Vertreter: **Lewinsky, Dietrich et al, Gotthardstrasse 81, D-8000 München 21 (DE)**

(54) **Verfahren und Vorrichtung zum mengenmässigen Erfassung von Wasserverlusten in erdverlegten Rohrleitungen.**

(57) Bei einem Verfahren zur mengenmäßigen Erfassung von Wasserverlusten in erdverlegten Rohrleitungen wird in einem bestimmten Zeitraum in ein mit Verbraucherabzweigungen versehenes, gesperrtes Rohrstrangstück (1) eine definierte Wassermenge eingespeist, der Wasserverbrauch bei den Anschlußstellen der Verbraucherabzweigungen gemessen und die Differenz dieser beiden Wassermengen gebildet.

Die zur Verfahrensdurchführung dienende Anordnung besteht aus einem mit Straßenschiebern (14) gesperrten Rohrstrangstück (1), in dem ein Hydrant (8) vorgesehen ist, der über eine Leitung (9), in der ein Wasserzähler (10) angeordnet ist, mit einem weiteren im betriebsbereiten Rohrnetz vorgesehenen Hydranten (7) verbunden ist. Die in den Verbraucherabzweigungen angeordneten Wasserzähler (6) sowie die in der Leitung (9) der beiden Hydranten (7, 8) vorgesehene Wasserzähler (10) sind mit einer Einrichtung zum mehrmaligen Erfassen des Zählerstandes versehen.

**PATENTANWÄLTE**
DIETRICH LEWINSKY
HEINZ-JOACHIM HUBER
REINER PRIETSCH
MÜNCHEN 21
GOTTHARDSTR. 81

<u>Verfahren zur mengenmäßigen Erfassung von
Wasserverlusten in erdverlegten
Rohrleitungen</u>

Die Erfindung betrifft ein Verfahren und
eine Anordnung zur mengenmäßigen Erfassung
von Wasserverlusten in erdverlegten Rohrleitungen.

Diese Erfindung erstreckt sich auf die
mengenmäßige Erfassung jenes Wassers, welches
nach den jeweiligen Wasserbehältern und vor
den bei den Wasserabnehmern eingebauten
Wasserzählern, also im öffentlichen Rohrnetz
unbemerkt verlorengeht. Diese Wasserverluste
werden in der Fachsprache Rohrnetzverluste
genannt und bewegen sich je nach Alter der
Rohrleitungen, der Bodenbeschaffenheit, dem
verwendeten Rohrwerkstoff, den Verkehrslasten usw. bei den größeren Wasserversorgungsunternehmen zwischen 8 % bis 35 %.

Für die Stadt Wien errechnen sie sich aus
den Werten für das Jahr 1977 folgerdermaßen:
A) Wasserabgabe an das
   öffentliche Rohrnetz............. 165,1 Mio m3
B) Summe der an die Abnehmer
   abgegebenen Wassermenge.......... <u>135,7 Mio m3</u>
C) Differenz aus A) - B) .......... 29,4 Mio m3

Von der Differenz C) müssen noch die
Pauschalabgaben abgezogen werden, die
sich wie folgt berechnen:

D) Pauschalabgaben:

    1) Wasserzählerstillstände............ 0,5

    2) Eigenverbrauch ................... 3,6

    3) Kanalspülkammern ................. 0,1

    4) Spritzhydranten ................. 1,0

    5) Straßenreinigung ................ 0,5

    6) Abgabe an Private aus

       Oberflurhydranten ................. <u>0,2</u>

                   = 5,9 Mio m3

E) Rohrnetzverlust = C) - D) = 23,5 Mio m3
=================================================

oder 14,2 % der an das öffentliche Rohrnetz
abgegebenen Wassermenge. Diese Menge entspricht einem täglichen Verlust von 64.380 m3
Wasser. Nachdem die Länge des Wiener Rohrnetzes einschließlich des Anteiles der erdverlegten Abzweigleitungen rund 3.500 km
beträgt, entspricht dieser Verlust etwa 18,7 m3
pro km und Tag. Diese Verluste erreichen nahezu die Kapazität der dritten Wiener Wasserleitung, die nach ihrer Fertigstellung ca.
65.000 m3 Wasser pro Tag liefern soll.

Derzeit wird das öffentliche Rohrnetz von
Bediensteten einmal im Jahr begangen und in
herkömmlicher Weise die unterirdischen Einbauten durch Abhorchen, Aufsetzen von
Geophonen oder ähnlichen Geräten auf das
Vorhandensein von Gebrechen durch Wahrnehmung
von Geräuschen kontrolliert und hörbare verdächtige Geräusche vorgeortet. Solche vorgeortete vermeintliche Gebrechen werden dann einem anderen Suchtrupp zur genaueren Lokalisierung des Gebrechens übergeben. Es ist aber besonders hervorzuheben, daß alle Gebrechen, die bei der Verortung nicht wahrgenommen werden konnten, nach wie vor bestehen. Sie zu entdecken ist eben mit der derzeitigen Methode in vielen Fällen nicht möglich. Abgesehen davon verursachen solche Suchdienste sehr hohe Nebengebühren, da sie vorwiegend, um zum Erfolg zu führen, nur in den Nachtstunden ausgeführt werden können.

Aufgabe der Erfindung ist es daher, ein Verfahren und eine Anordnung zur Erfassung der Wasserverluste zu schaffen, mit dem bzw. mit der der Meßvorgang exakt durchgeführt werden kann. Das erfindungsgemäße Verfahren ist dadurch gekennzeichnet, daß ein mit Verbraucherabzweigungen versehenes Rohrstrangstück gesperrt wird, daß in dieses gesperrte Rohrstrangstück eine definierte Wassermenge in einem bestimmten Zeitraum eingespeist wird, daß im gleichen Zeitraum der Wasserverbrauch bei den Anschlußstellen der Verbraucherabzweigungen gemessen wird und daß die Differenz aus dem gemessenen Verbrauch und der definierten Wassermenge gebildet wird.

Mit diesem Verfahren ist es erstmals möglich, systematisch, rasch und sicher alle Defekte, wie beispielsweise Lecks im Wasserrohrleitungsnetz, abschnittsweise festzustellen.

Zur Durchführung dieses Verfahrens ist die erfindungsgemäße Anordnung dadurch gekennzeichnet, daß in dem mit Straßenschiebern gesperrten Rohrstrangstück ein Hydrant vorgesehen ist, der über eine Leitung, in der ein Wasserzähler angeordnet ist, mit einem weiteren im betriebsbereiten Rohrnetz vorgesehenen Hydranten verbunden ist und daß jeder in den Verbraucherabzweigungen angeordnete Wasserzähler, sowie auch der in der Leitung der beiden Hydranten vorgesehene Wasserzähler mit einer Einrichtung zum mehrmaligen Erfassen des Zählerstandes versehen ist. Durch diese Anordnung ist es erstmals möglich, die Wasserverluste auch während der normalen Arbeitszeit, also untertags festzustellen. Ein weiterer Vorteil liegt darin, daß die Verbraucherseite während des Meßvorgangs keine Beeinträchtigung erfährt. Dies deshalb, da ja alle Anschlußstellen mit Wasserzählern ausgestattet sind und durch die Fremdeinspeisung eine Entnahme möglich ist.

Eine besondere Ausgestaltung der Erfindung liegt darin, daß die Einrichtung zum Erfassen des Zählerstandes ein Fotoapparat ist. Zur Erfassung des Zählerstandes wird bei jedem Wasserzähler ein entsprechend konstruierter Fotoapparat angeordnet. Nach jedem Meßvorgang wird der Fotoapparat abgebaut und ist für die nächste Messung betriebsbereit.

Nach einem weiteren Merkmal der Erfindung ist eine Steuereinrichtung zur Betätigung der Einrichtungen vorgesehen, die den Zählerstand bei allen Wasserzählern gleichzeitig erfaßt. Durch diese Ausgestaltung können innerhalb eines frei zu wählenden Zeitintervalles, ausgelöst durch z.B. einen UKW-Impuls, zwei Fotoaufnahmen des Zifferblattes vom Wasserzähler hergestellt werden. Die hergestellten Fotos zeigen von jedem Wasserzähler zwei Bilder des Wasserzählerzifferblattes innerhalb des gewählten Zeitintervalles, so daß die jeweiligen Differenzen der Wasserzählerstände den Verbrauch des Wasserabnehmers im Beobachtungszeitraum, der in diesem Fall dem Meßzeitraum entspricht, ergeben.

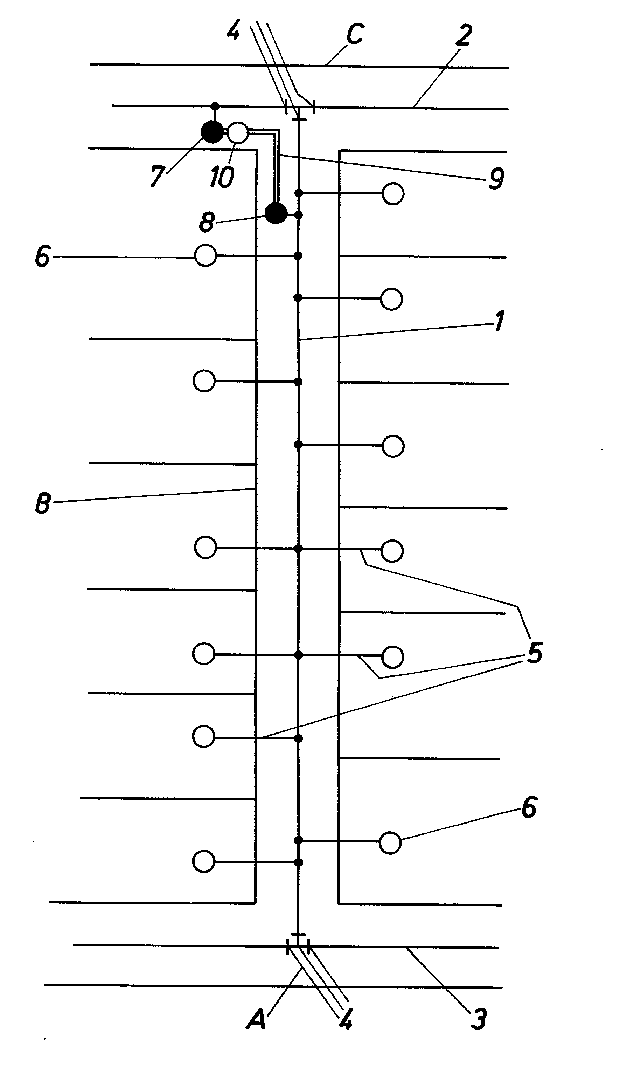

Anhand eines in der Zeichnung dargestellten Ausführungsbeispieles wird die Erfindung näher erläutert.

In der Zeichnung sind drei Straßenzüge A,B,C dargestellt, in denen erdverlegt die Wasserleitungsrohre vorgesehen sind. Das Rohrstrangstück 1 der Straße B wird von den Hauptleitungen 2, 3 der Straßen A,C gespeist. An den Verbindungsstellen des Rohrstrangstückes 1 mit den Hauptleitungen 2, 3 sind Straßenschieber 4 angeordnet. Mit diesen Straßenschiebern 4 können die von den Verbindungsstellen wegführenden Leitungen gesperrt werden.

Von dem Rohrstrangstück 1 zweigen die einzelnen Verbraucherleitungen 5 zu den einzelnen Liegenschaften ab. Jede Verbraucherleitung weist einen Wasserzähler 6 auf, der den Verbrauch von Wasser registriert. Sowohl die Hauptleitungen 2, als auch das Rohrstrangstück 1 sind mit Oberflurhydranten 7, 8 verbunden.

Um nun Wasserverluste im öffentlichen Rohrnetz bei diesem Beispiel im Rohrstrangstück 1 feststellen zu können, wird mittels der Straßenschieber 4 das Rohrstrangstück 1 von den Heuptleitungen 2, 3 getrennt. Gleichzeitig wird von dem Oberflurhydranten 7 eine Leitung 9, in diesem Fall eine Schlauchleitung, zum Oberflurhydranten 8 gelegt. In diese Leitung 9 wird ebenfalls ein Wasserzähler 10 angeordnet. Das gesperrte Rohrstrangstück 1 wird nun über den Oberflurhydranten 7 und die Leitung 9 fremdgespeist.

Vor der Einleitung des Meßvorganges wird auf alle Wasserzähler 6 und auf den in der Leitung angeordneten Wasserzähler 10 je ein entsprechend konstruierter Fotoapparat aufgesetzt. Diese Fotoapparate sind dergestalt, daß über eine geeignete Steuereinrichtung alle gleichzeitig ausgelöst werden können. Die Auslösung kann beispielsweise über einen UKW-Impuls erfolgen. Es muß aber auch mit diesen Fotoapparaten möglich sein, zwei Fotos in einem frei wählbaren Zeitintervall herzustellen.

Am Beginn des Meßvorganges werden nun alle Zählerstände fotographisch festgehalten. Nach dem gewählten Zeitintervall werden wieder alle Zählerstände festgehalten. Hierauf ist der Meßvorgang beendet und die Straßenschieber 4 können geöffnet und die Leitung 9 abgebaut werden.

Die jeweiligen Differenzen der Zählerstände, die von den Fotos leicht errechnet werden können, summiert, ergeben den Verbrauch der Wasserabnehmer im Beobachtungszeitraum.

Die Verbrauchersumme im Vergleich zur eingespeisten Wassermenge über dem Wasserzähler 10 ergibt nun entweder den theoretischen Wert Null für den Fall, daß das geprüfte Rohrstrangstück 1 dicht ist, bzw. den Wert, der der Menge des durch Gebrechen ausgeflossenen Wassers entspricht.

PATENTANWÄLTE
DIETRICH LEWINSKY
H INZ-JOACHIM HUBER
REINER PRIETSCH
MÜNCHEN 21
GOTTHARDSTR. 81

- 1 -

Patentansprüche:

1. Verfahren zur mengenmäßigen Erfassung von Wasserverlusten in erdverlegten Rohrleitungen, dadurch gekennzeichnet, daß ein mit Verbraucherabzweigungen versehenes Rohrstrangstück (1) gesperrt wird, daß in dieses gesperrte Rohrstrangstück (1) eine definierte Wassermenge in einem bestimmten Zeitraum eingespeist wird, daß im gleichen Zeitraum der Wasserverbrauch bei den Anschlußstellen der Verbraucherabzweigungen gemessen wird und daß die Differenz aus dem gemessenen Verbrauch und der definierten Wassermenge gebildet wird.

2. Anordnung zur Durchführung des Verfahrens nach Anspruch 1, dadurch gekennzeichnet, daß in dem mit Straßenschiebern (4) gesperrten Rohrstrangstück (1) ein Hydrant (8) vorgesehen ist, der über eine Leitung (9), in der ein Wasserzähler (10) angeordnet ist, mit einem weiteren im betriebsbereiten Rohrnetz vorgesehenen Hydranten (7) verbunden ist und daß jeder in den Verbraucherabzweigungen angeordnete Wasserzähler (6), sowie auch der in der Leitung (9) der beiden Hydranten (7, 8) vorgesehene Wasserzähler (10) mit einer Einrichtung zum mehrmaligen Erfassen des Zählerstandes versehen ist.

3. Anordnung nach Anspruch 2, dadurch gekennzeichnet, daß die Einrichtung zum Erfassen des Zählerstandes ein Fotoapparat ist.

4. Anordnung nach Anspruch 2 oder 3, dadurch gekennzeichnet, daß eine Steuereinrichtung zur Betätigung der Einrichtungen vorgesehen ist, die den Zählerstand bei allen Wasserzählern (6, 10) gleichzeitig erfaßt.

0010575

**Europäisches Patentamt**

**EUROPÄISCHER RECHERCHENBERICHT**

0010575

Nummer der Anmeldung

EP 79 10 2738

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C - 620 633 (E. ALLSTADT)<br>* Insgesamt * | 1,2,4 |
| | -- | |
| A | FR - A - 340 162 (F. AVRIL et al.)<br>* Insgesamt * | 1 |
| | -- | |
| A | US - A - 1 693 737 (W.B. WELDON)<br>* Insgesamt * | 1 |
| | -- | |
| A | US - A - 3 667 285 (E.L. WRIGHT)<br>* Zusammenfassung; Figur 1 * | 1 |
| | -- | |
| P | DE - A - 2 807 632 (SEBA MESS- UND ORTUNGSTECHNIK GmbH & CO. KG.)<br>* Insgesamt * | 1,2,4 |
| | ---- | |

**KLASSIFIKATION DER ANMELDUNG (Int.Cl. 3)**

G 01 M 3/28

**RECHERCHIERTE SACHGEBIETE (Int. Cl. 3)**

G 01 M 3/00
3/02
3/26
3/28
F 17 D 5/02
E 03 B 7/07
7/09

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-11-1979 | VAN ASSCHE |

EPA form 1503.1  06.78